(19) Europäisches Patentamt

European Patent Office

Office européen des brevets

(11) **EP 4 597 904 A1**

(12) **EUROPEAN PATENT APPLICATION**
published in accordance with Art. 153(4) EPC

(43) Date of publication:
**06.08.2025 Bulletin 2025/32**

(21) Application number: **23873107.9**

(22) Date of filing: **26.09.2023**

(51) International Patent Classification (IPC):
$H04L\ 5/00^{(2006.01)}$    $H04L\ 27/26^{(2006.01)}$
$H04W\ 72/04^{(2023.01)}$    $H04W\ 72/23^{(2023.01)}$
$H04W\ 72/12^{(2023.01)}$    $H04B\ 7/0404^{(2017.01)}$

(52) Cooperative Patent Classification (CPC):
H04B 7/0404; H04L 5/00; H04L 27/26;
H04W 72/04; H04W 72/12; H04W 72/23

(86) International application number:
**PCT/KR2023/014820**

(87) International publication number:
**WO 2024/071993 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 KR 20220124756
16.02.2023 KR 20230021064
06.04.2023 KR 20230045731**

(71) Applicant: **LG Electronics Inc.**
**Yeongdeungpo-gu
Seoul 07336 (KR)**

(72) Inventors:
• **CHOI, Seunghwan**
**Seoul 06772 (KR)**
• **YANG, Suckchel**
**Seoul 06772 (KR)**
• **KIM, Seonwook**
**Seoul 06772 (KR)**

(74) Representative: **Plasseraud IP**
**104 Rue de Richelieu
CS92104
75080 Paris Cedex 02 (FR)**

(54) **METHOD AND DEVICE FOR TRANSMITTING OR RECEIVING SIGNAL IN WIRELESS COMMUNICATION SYSTEM**

(57) A method and a device for transmitting or receiving a signal in a wireless communication system, disclosed in the present specification, allow uplink switching to be performed among three or more bands. Disclosed are methods for clarifying a band at which one Tx chain not used for a 1-port transmission from among two Tx chains is located after uplink switching if only the 1-port transmission exists on a carrier of one band, as a transmission after uplink switching

[FIG. 5]

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

In an aspect of the present disclosure, provided herein is a method of transmitting and receiving signals by a user equipment (UE) in a wireless communication system. The method includes: configuring uplink bands including a first band, a second band, and a third band; based on that a state of transmission (Tx) chains is not unique after uplink switching, receiving (i) a first parameter for indicating the state of the Tx chains and (ii) a second parameter for configuring an associated band for the third band; and in an operational state capable of supporting 1-port transmission (first transmission) on carriers of each of the first band and the second band, performing 1-port transmission (second transmission) on carriers of the third band, without transmission in the first band and the second band. The uplink switching is performed based on the second transmission. Based on that a value of the first parameter indicates one Tx chain and that the associated band is configured by the second parameter, the UE considers that for the uplink switching, 1-port transmission is performed on carriers of each of the third band and the associated band.

In another aspect of the present disclosure, provided herein is a method of transmitting and receiving signals by a base station (BS) in a wireless communication system. The method includes: configuring uplink bands including a first band, a second band, and a third band for a UE; based on that a state of Tx chains is not unique after uplink switching, transmitting (i) a first parameter for indicating the state of the Tx chains and (ii) a second parameter for configuring an associated band for the third band to the UE; and receiving 1-port transmission (second transmission) on carriers of the third band from the UE in an operational state capable of supporting 1-port transmission (first transmission) on carriers of each of the first band and the second band, without transmission in the first band and the second band. The uplink switching is performed based on the second transmission. Based on that a value of the first parameter indicates one Tx chain and that the associated band is configured by the second parameter, the BS considers that for the uplink switching, 1-port transmission is performed on carriers of each of the third band and the associated band.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

**Advantageous Effects**

According to one embodiment of the present disclosure, when control and data signals are transmitted and received between communication devices, the signals may be transmitted and received more efficiently based on operations different from those in the prior art

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**BRIEF DESCRIPTION OF THE DRAWINGS**

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

**DETAILED DESCRIPTION**

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

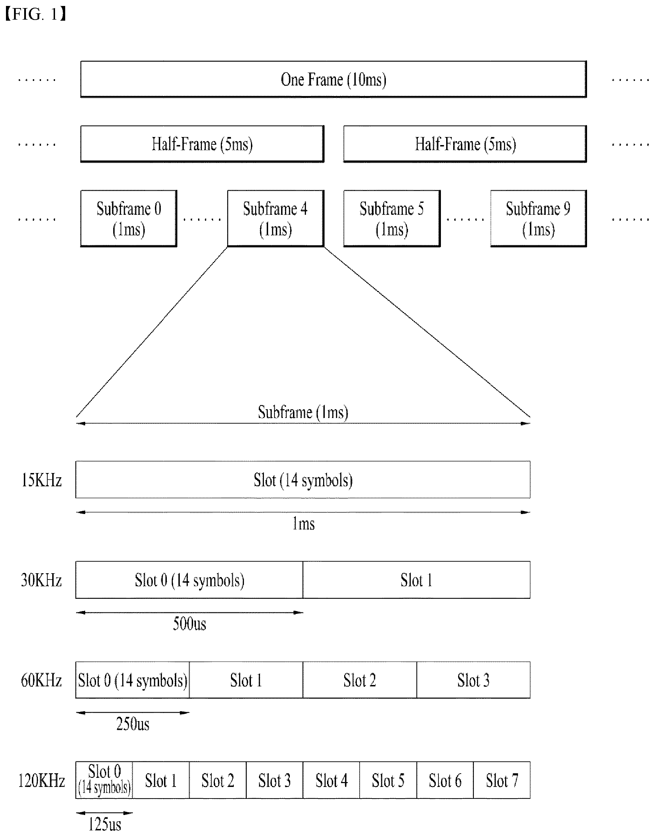

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $M^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot <br> * $N^{frame,u}_{slot}$: number of slots in a frame <br> * $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

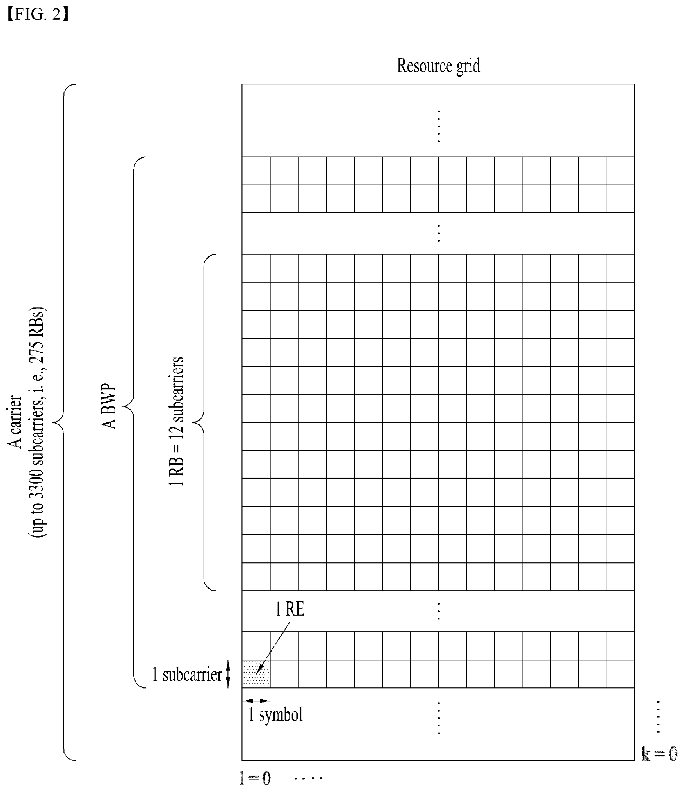

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace $m \in \{0, 1, ..., M-1\}$ may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

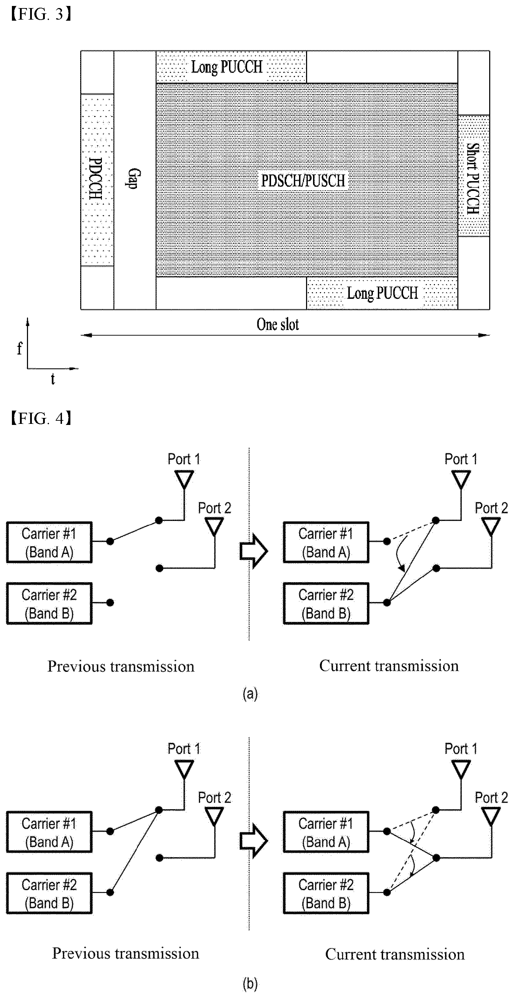

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

UL Physical Channels/Signals

(1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

(2) PUCCH

A PUCCH may carry UCI. The UCI includes the following information.

- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

Table 7 shows PUCCH formats. The PUCCH formats may be classified according to UCI payload sizes/transmission lengths (e.g., the number of symbols included in a PUCCH resource) and/or transmission structures. The PUCCH formats may be classified into short PUCCH formats (PUCCH formats 0 and 2) and long PUCCH formats (PUCCH formats 1, 3, and 4) according to the transmission lengths.

[Table 4]

| PUCCH format | Length in OFDM symbols $N^{\text{PUCCH}}_{\text{symb}}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | $>2$ | HARQ, CSI, [SR] | CP-OFDM |
| 3 | 4 - 14 | $>2$ | HARQ, CSI, [SR] | DFT-s-OFDM (no UE multiplexing) |
| 4 | 4 - 14 | $>2$ | HARQ, CSI, [SR] | DFT-s-OFDM (Pre DFT OCC) |

(0) PUCCH Format 0 (PF0)

- Supportable UCI payload size: up to K bits (e.g., K = 2)
- Number of OFDM symbols included in one PUCCH: 1 to X symbols (e.g., X = 2)
- Transmission structure: only a UCI signal is configured with no DM-RS, and a UCI state is transmitted by selecting and transmitting one of a plurality of sequences.

(1) PUCCH Format 1 (PF1)

- Supportable UCI payload size: up to K bits (e.g., K = 2)
- Number of OFDM symbols included in one PUCCH: Y to Z symbols (e.g., Y = 4 and Z = 14)
- Transmission structure: UCI and a DM-RS are configured in different OFDM symbols based on time division multiplexing (TDM). For the UCI, a specific sequence is multiplied by a modulation symbol (e.g., QPSK symbol). A cyclic shift/orthogonal cover code (CS/OCC) is applied to both the UCI and DM-RS to support code division multiplexing (CDM) between multiple PUCCH resources (complying with PUCCH format 1) (in the same RB).

(2) PUCCH Format 2 (PF2)

- Supportable UCI payload size: more than K bits (e.g., K = 2)
- Number of OFDM symbols included in one PUCCH: 1 to X symbols(e.g., X = 2)
- Transmission structure: UCI and a DMRS (DM-RS) are configured/mapped in/to the same symbol based on frequency division multiplexing (FDM), and encoded UCI bits are transmitted by applying only an inverse fast Fourier transform (IFFT) thereto with no DFT.

(3) PUCCH Format 3 (PF3)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. Encoded UCI bits are transmitted by applying a DFT thereto. To support multiplexing between multiple UEs, an OCC is applied to the UCI, and a CS (or interleaved frequency division multiplexing (IFDM) mapping) is applied to the DM-RS before the DFT.

(4) PUCCH Format 4 (PF4 or F4)

- Supportable UCI payload size: more than K bits (e.g., K = 2)
- Number of OFDM symbols included in one PUCCH: Y to Z symbols (e.g., Y = 4 and Z = 14)
- Transmission structure: UCI and a DMRS are configured/mapped in/to different symbols based on TDM. The DFT is applied to encoded UCI bits with no multiplexing between UEs.

**Uplink switching with 3 or 4 uplink bands**

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Generally, due to a size of a UE, the number of antennas to be installed on the corresponding UE is limited. A UE with N transmission chains via N antennas may support up to N 1-port UL transmissions simultaneously or up to N-port UL transmissions. A method is required to support a UE with a limited transmission chain to perform UL transmission effectively. Hereinafter, implementations of this specification for UL transmission (Tx) switching are described. Most UEs developed to date support up to two Tx chains, and thus the implementations of this specification are described below assuming that the UE supports UL transmission through up to two Tx chains, i.e., up to two ports. However, implementations of this specification are not limited to 1-port or 2-port UL transmission, but may also be applied to N-port UL transmission, where N may be greater than 2.

FIG. 4 is a diagram illustrating a concept of UL transmission switching.

To increase the throughput and efficiency of UL transmission, NR Rel-16 provides UL Tx switching (UTS), which switches Tx chain(s) connected to UL carrier(s) under a certain condition, for the purpose of enabling a UE to effectively perform 1-port UL transmission or 2-port UL transmission by using up to two Tx chains. FIG. 4(a) illustrates 1Tx-2Tx switching between two carriers/bands, and FIG. 4(b) illustrates 2Tx-2Tx switching between two carriers/bands.

For example, if UL transmission (hereinafter, "previous transmission") is performed on carrier #1 with 1 Tx chain, and then UL transmission (hereinafter, "current transmission") is configured/instructed to be performed on another carrier #2 with 2 Tx chains, the UE may switch the Tx chain connected to carrier #1 to carrier #2 to enable 2-port UL transmission on carrier #2. These UTS configuration and switching method may be applied to band combinations corresponding to evolved-universal terrestrial radio access new-radio-dual connectivity (EN-DC) without supplementary UL (SUL), standalone SUL, and inter-band CA. In NR Rel-17, an additional condition is introduced to extend the 1Tx-2Tx switching (i.e., switching between 1 Tx chain and 2 Tx chain) of existing NR Rel-16 to 2Tx-2Tx switching (i.e., switching between 2 Tx chain and 2 Tx chain), and at the same time, UTS between two carriers introduced in NR Rel-16 is extended to allow UTS between two different bands (e.g., 1 carrier in one band and 2 contiguous carriers in another band).

When a certain condition is satisfied and the UE is configured with uplinkTxSwitching via RRC signaling, the UE may omit UL transmission during uplink switching gap NTx1-Tx2. For example, when certain conditions are satisfied and the UE is configured with uplinkTxSwitching via RRC signaling, the UE omits all UL transmission(s), including UL transmission scheduled via DCI and UL transmissions configured by higher layer signaling (e.g., configured grant-based PUSCH), during a UL switching gap $N_{Tx1-Tx2}$. The switching gap NTx1-Tx2 may be indicated by uplinkTxSwitchingPeriod2T2T provided from the UE to the BS via UE capability report when uplinkTxSwitching-2T-Mode is configured via RRC signaling, otherwise the switching gap NTx1-Tx2 may be indicated by uplinkTxSwitchingPeriod provided from the UE to the BS via UE capability report. Here, the RRC configuration uplinkTxSwitching may be provided to the UE as included in a configuration regarding a serving cell, and may include uplinkTxSwitchingPeriodLocation indicating whether a location of a UL Tx switching period is configured on the UL carrier in case of inter-band UL CA, SUL or (NG)EN-DC, and uplinkTxSwitchingCarrier indicating that the configured carrier is carrier 1 or carrier 2 for dynamic UL Tx switching. The RRC parameter uplinkTxSwitching-2T-Mode indicates that a 2Tx-2Tx switching mode is configured for inter-band UL CA or SUL, in which case a switching gap duration for triggered UL switching may be equal to a switching time capability value reported for the switching mode. When the RRC parameter uplinkTxSwitching-2T-Mode is not provided and uplinkTxSwitching is configured, it may be interpreted that 1Tx-2Tx UTS is configured, in which case there may be one UL (or one UL band in case of intra-band) configured with uplinkTxSwitching.

When the UE indicates the capability for UL switching for a band combination and configures the band combination to MCG using E-UTRA radio access and SCG using NR radio access, to UL CA, or to a serving cell with two UL carriers with higher layer (e.g. RRC) parameter supplementary Uplink, the switching gap may be present under certain conditions. For example, the following tables are taken from 3GPP TS 38.214 V17.1.0 and illustrate UTS conditions.

When UL switching is triggered for UL transmission starting at $T_0$, which is after $T_0$ - $T_{offset}$, the UE is not expected to cancel the UL switching, or to trigger any other new UL switching that occurs before $T_0$ for any other UL transmission scheduled after $T_0$ - $T_{offset}$, where $T_{offset}$ may be a UE processing procedure time defined for UL transmission triggering switching (e.g. see S5.3, S5.4, S6.2.1 and S6.4 of 3GPP TS 38.214 and S9 of 3GPP TS 38.213). The UE is not expected to perform more than one UL switching in a slot with $u_{UL} = \max(u_{UL,1}, u_{UL,2})$, where $u_{UL,1}$ corresponds to a subcarrier spacing of an active UL BWP of one UL carrier before the switching gap and $u_{UL,2}$ corresponds to the subcarrier spacing of the active UL BWP of another UL carrier after the switching gap.

[Table 5]

---

#### 6.1.6.1    Uplink switching for EN-DC

For a UE indicating a capability for uplink switching with *BandCombination-UplinkTxSwitch* for a band combination, and if it is for that band combination configured with a MCG using E-UTRA radio access and wi a SCG using NR radio access (EN-DC), if the UE is configured with uplink switching with parameter *uplinkTxSwitching*,

- for the UE configured with *switchedUL* by the parameter *uplinkTxSwitchingOption*, when the UE is to transmit in the uplink based on DCI(s) received before $T_0 - T_{offset}$ or based on a higher layer configuration(s):

  - when the UE is to transmit an NR uplink that takes place after an E-UTRA uplink on another uplink carrier then the UE is not expected to transmit for the duration of $N_{Tx1\text{-}Tx2}$ on any of the two carrier

  - when the UE is to transmit an E-UTRA uplink that takes place after an NR uplink on another uplink carrier then the UE is not expected to transmit for the duration of $N_{Tx1\text{-}Tx2}$ on any of the two carrier

  - the UE is not expected to transmit simultaneously on the NR uplink and the E-UTRA uplink. If the UE is scheduled or configured to transmit any NR uplink transmission overlapping with an E-UTRA uplink transmission, the NR uplink transmission is dropped,

- for the UE configured with *uplinkTxSwitchingOption* set to 'dualUL', when the UE is to transmit in the uplink based on DCI(s) received before $T_0 - T_{offset}$ or based on a higher layer configuration(s):

  - when the UE is to transmit an NR two-port uplink that takes place after an E-UTRA uplink on another uplink carrier then the UE is not expected to transmit for the duration of $N_{Tx1\text{-}Tx2}$ on any of the two carriers.

  - when the UE is to transmit an E-UTRA uplink that takes place after an NR two-port uplink on another uplink carrier then the UE is not expected to transmit for the duration of $N_{Tx1\text{-}Tx2}$ on any of the two carriers.

  - the UE is not expected to transmit simultaneously a two- port transmission on the NR uplink and the E-UTRA uplink.

- in all other cases the UE is expected to transmit normally all uplink transmissions without interruptions.

- when the UE is configured with *tdm-PatternConfig* or by *tdm-PatternConfig2*

  - for the E-UTRA subframes designated as uplink by the configuration, the UE assumes the operation state in which one-port E-UTRA uplink can be transmitted.

  - for the E-UTRA subframes other than the ones designated as uplink by the configuration, the UE assumes the operation state in which two-port NR uplink can be transmitted.

---

[Table 6]

## 6.1.6.2    Uplink switching for carrier aggregation

For a UE indicating a capability for uplink switching with *BandCombination-UplinkTxSwitch* or *uplinkTxSwitchingPeriod2T2T* for a band combination, and if it is for that band combination configured with uplink carrier aggregation:

- If the UE is configured with uplink switching with parameter *uplinkTxSwitching*, when the UE is to transmit in the uplink based on DCI(s) received before $T_0 - T_{offset}$ or based on a higher layer configuration(s):

  - When the UE is to transmit a 2-port transmission on one uplink carrier on one band and if the preceding uplink transmission is a 1-port transmission on another uplink carrier on another band, the the UE is not expected to transmit for the duration of $N_{Tx1\text{-}Tx2}$ on any of the carriers.

  - When the UE is to transmit a 1-port transmission on one uplink carrier on one band and if the preceding uplink transmission is a 2-port transmission on another uplink carrier on another band, the the UE is not expected to transmit for the duration of $N_{Tx1\text{-}Tx2}$ on any of the carriers.

  - For the UE configured with *uplinkTxSwitchingOption* set to 'switchedUL', when the UE is to transm a 1-port transmission on one uplink carrier on one band and if the preceding uplink transmission wa a 1-port transmission on another uplink carrier on another band, then the UE is not expected to transmit for the duration of $N_{Tx1\text{-}Tx2}$ on any of the carriers.

  - For the UE configured with *uplinkTxSwitchingOption* set to 'dualUL', when the UE is to transmit a 2 port transmission on one uplink carrier on one band and if the preceding uplink transmission was a port transmission on a carrier on the same band and the UE is under the operation state in which 2-port transmission cannot be supported in the same band, then the UE is not expected to transmit for the duration of $N_{Tx1\text{-}Tx2}$ on any of the carriers.

  - For the UE configured with *uplinkTxSwitchingOption* set to 'dualUL', when the UE is to transmit a port transmission on one uplink carrier on one band and if the preceding uplink transmission was a port transmission on another uplink carrier on another band and the UE is under the operation state i which 2-port transmission can be supported on the same uplink carrier, then the UE is not expected transmit for the duration of $N_{Tx1\text{-}Tx2}$ on any of the carriers.

  - For the UE configured with *uplinkTxSwitchingOption* set to 'dualUL', if the UE is configured with *OneT* with *uplinkTxSwitching-DualUL-TxState*, when the UE is under the operation state in which 2 port transmission can be supported on one carrier on one band followed by no transmission on any carrier on the same band and 1-port transmission on the other carrier on another band the UE shall consider this as if 1-port transmission was transmitted on both uplinks, otherwise the UE shall consider this as if 2-port transmission took place on the transmitting carrier.

  - If *uplinkTxSwitching-2T-Mode* is configured, when the UE is to transmit a 2-port transmission on or uplink carrier on one band and if the preceding uplink transmission is a 2-port transmission on another uplink carrier on another band, then the UE is not expected to transmit for the duration of $N_{Tx1\text{-}Tx2}$ on any of the carriers.

  - The UE is not expected to be scheduled or configured with uplink transmissions that result in simultaneous transmission on two antenna ports on one uplink carrier on one band, and any transmission on another uplink carrier on another band.

- In all other cases the UE is expected to transmit normally all uplink transmissions without interruptions

[Table 7]

## 6.1.6.3 Uplink switching for supplementary uplink

For a UE indicating a capability for uplink switching with *BandCombination-UplinkTxSwitch* for a band combination, and if it is for that band combination configured in a serving cell with two uplink carriers with higher layer parameter *supplementaryUplink*:

- If the UE is configured with uplink switching with parameter *uplinkTxSwitching*,

  - If the UE is to transmit any uplink channel or signal on a different uplink on a different band from th preceding transmission occasion based on DCI(s) received before $T_0 - T_{offset}$ or based on a highe layer configuration(s), then the UE assumes that an uplink switching is triggered in a duration of switching gap $N_{Tx1\text{-}Tx2}$, where $T_0$ is the start time of the first symbol of the transmission occasion of the uplink channel or signal and $T_{offset}$ is the preparation procedure time of the transmission occasion of the uplink channel or signal given in clause 5.3, clause 5.4, clause 6.2.1, clause 6.4 and i clause 9 of [6, TS 38.213], respectively. During the switching gap $N_{Tx1\text{-}Tx2}$, the UE is not expected t transmit on any of the two uplinks.

  - In all other cases the UE is expected to transmit normally all uplink transmissions without interruptions.

NR supports a wide spectrum across various frequency ranges. The availability of a spectrum is expected to increase in a 5G advanced market due to repurposing of bands originally used in previous generation cellular networks. Especially for a low-frequency FR1 band, an available spectral block tends to be more fragmented and distributed over narrower bandwidths. For an FR2 band and some FR1 bands, a multicarrier operation within a band is required as an available spectrum is to be widened. To satisfy diverse spectrum requirements, it is important to provide higher throughput and adequate coverage in a network by using these distributed spectrum band or wider bandwidth spectrum in a more spectrum/power efficient and flexible manner. For a multicarrier UL operation, the current specification has several limitations. For example, a 2TX UE may be configured with up to two UL bands to be changed only by RRC reconfiguration, and UL Tx switching may only be performed between the two UL bands for the 2Tx UE. Instead of RRC-based cell(s) reconfiguration, dynamically selecting carriers with UL Tx switching based on, for example, data traffic, TDD DL/UL configuration, bandwidth and channel conditions of each band may potentially lead to a higher UL data rate, spectrum utilization, and UE capacity.

For a higher UL data rate, spectrum utilization, and UE capacity, UTS between more than two bands is currently considered. Hereinafter, UTS trigger condition(s), UTS-related configuration method(s), and/or UTS operation method(s) required to support UTS between multiple bands (e.g., three or more bands) according to some implementations of this specification are described.

Hereinafter, a cell may be interpreted according to context. For example, the cell may mean a serving cell. The cell may include one DL component carrier (CC) and 0 to 2 UL CCs, but implementations of this specification described below are not limited thereto. In the following, unless otherwise specified, the terms cell and CC may be used interchangeably. In some implementations of this specification, the cell/CC may be replaced with an (active) BWP within the serving cell. Unless otherwise specified, in the implementations of this specification described below, the cell/CC may be used as a concept encompassing PCell, SCell, PsCell, and the like, which may be configured/expressed in a carrier aggregation (CA)/dual connectivity (DC) scenario.

Hereinafter, the term "band" means a frequency band, and the term "band" may be used interchangeably with the terms "carrier" and/or "cell" within the band. In this case, each band may include one carrier or multiple (e.g., two) contiguous (or non-contiguous) carriers. The proposed methods described below may be applied to inter-band UL CA, intra-band UL CA, NR-DC, EN-DC, (standalone) SUL scenarios and related band combinations (unless otherwise specified).

For convenience of explanation in the implementations of this specification described below, the following notation is used.

- When UTS occurs, it may be expressed as a UTS trigger.
- Band (or carrier) related to UTS: This may refer to a band/carrier before and after UTS occurs.
- A Tx chain transition time caused by UTS is denoted as a UTS gap (or UTS period). During the UTS gap, no UL transmission occurs in the band/carrier related to the UTS. The UTS gap (switching gap) and the UTS period (switching period) may be specifically distinguished as follows.

  ▪ Switching period: Switching time reported by UE. Basically, this is a band pair unit including two bands, and is reported as one of values of {35 us, 140 us, and 210 us}. For a specific switching case, a single value may be reported as a band combination unit including three or more bands. In this specification, it may also be expressed as a UTS period/time or a switching period.

■ Switching gap: Time duration during which UL transmission in all (or some) bands related to a single UL Tx switching event due to this. The switching gap may be determined as a switching period (reported by a UE) for the corresponding Tx switching or determined by using the switching period of each band pair related to the corresponding Tx switching.

For example, for A(1T)+B(1T)->C(2T) switching, in which transmission occurs using 2 Tx chains on a band C while 1 Tx chain is connected to a band A and 1 Tx chain is connected to a band B, if a band combination {A+B, C} is reported by the UE, the switching gap is determined as a reported value. If not reported, the switching gap may be determined as a value derived using the switching period AB (period_AB) for a band pair including the bands A and B and the switching period AC (period_AC) for a band pair including the bands A and C. In this specification, it may also be expressed as a UTS gap/interval or a switching interval.

- A 1 Tx chain may be expressed as 1T, and a 2Tx chain may be expressed as 2T.
- 1-port UL transmission may be expressed as 1p, and 2-port UL transmission may be expressed as 2p.
- When 1 Tx chain or 2 Tx chains are connected to a certain band A (and/or carrier(s) belonging to the band A), these states may be expressed as A(1T) and A(2T), respectively.
- When 1 Tx chain is connected to each of two specific bands A (and/or carrier(s) belonging to band A) and band B (and/or carrier(s) belonging to band A), this state may be expressed as A(1T)+B(1T).
- UL transmission may mean any UL channel or UL signal supported by NR, and the like.
- "Previous transmission" may mean the most recent UL transmission performed by the UE prior to UTS triggering, and "current transmission" may mean UL transmission performed by the UE immediately (or simultaneously) with UTS triggering. The term "transmission" hereinafter may mean "UL transmission".
- The expression that UL transmission occurs may mean UL transmission scheduled via DCI for a UL grant and/or UL transmission configured via higher layer signaling (e.g., RRC signaling) (e.g., configured grant UL transmission).
- When 1-port UL transmission occurs in a specific band A (and/or carrier(s) belonging to band A), it may be expressed as A(1p), and when 2-port UL transmission occurs, it may be expressed as A(2p).
- When 1-port UL transmission occurs in two specific bands, e.g., band A and band B, (and/or carrier(s) belonging to the corresponding band), it may be expressed as A(1p)+B(1p).

An RRC parameter uplinkTxSwitchingOption provided to the UE by the BS may indicate which option is configured for dynamic UL Tx switching for inter-band UL CA or (NG)EN-DC. This RRC parameter is configured to switchedUL when a network configures Option1, and is configured to dualUL when the network configures Option2. When the UE receives the corresponding RRC value configured to "switchedUL", the UE does not expect/perform that 1 Tx chain is to be connected to each of the corresponding two bands, or does not expect/perform concurrent transmission (instruction/configuration) on the corresponding two bands even if 1 Tx chain is connected to each of the two bands. Hereinafter, this is expressed as an Option1 operation configured. For example, the UE configured with switchedUL may not expect concurrent transmission of A(1T) and B(1T) to be instructed/configured, and the BS may not instruct/configure concurrent transmission of A(1T) and B(1T) to the UE. When the UE receives the corresponding RRC value configured to "dualUL", the UE may expect to schedule/configure (or perform) concurrent transmission on the corresponding two bands via 1 Tx chain connected to each of the two bands, and this is expressed as an Option2 operation configured below.

The Tx chain may also be expressed as Tx or a transmitter.

Some implementations of this specification described below are described in terms of UTS generation between two bands in a situation in which four bands/carriers are configured (or activated). However, the same method(s) as the implementations of this specification described below may also be applied to UTS that occurs in a situation in which a smaller number of bands (e.g., 3) are configured/activated. The same method(s) as the implementations of this specification described below may also be applied to UTS that occurs in a situation in which a larger number of bands (e.g., 5) are configured/activated.

Some implementations of this specification described below are described without distinguishing between 1Tx-2Tx switching or 2Tx-2Tx switching. However, some implementations may be specifically applicable to 1Tx-2Tx switching and/or 2Tx-2Tx switching.

In some implementations of this specification described below, the "simultaneous transmission" in multiple bands may mean that a start time (e.g., start symbol) of UL transmissions in each of the corresponding multiple bands coincide and/or some (or all) of the UL transmission resources/periods in each of the multiple bands overlap in time.

In this specification, the symbols '-', '■', '♦', and '●' listed at the frontmost paragraph may indicate vertical/horizontal relationships between descriptions in each paragraph. In detail, it may mean upper categories in the order of '-', '■',

'♦', and '●'. For example, the '■' stated after '-' may be an additional explanation for '-'. The '♦' following '■' may be an additional explanation for '■'. The '●' following '♦' may be an additional explanation for '♦'.

**[0] Description of Conventional Operation**

Section [0] summarizes a handling method for cases where, after UL Tx switching is triggered due to 1-port UL transmission between two bands, the state of Tx chains is impossible to be uniquely determined.

In conventional 3GPP Rel-17, UL Tx switching may be configured/defined in the following three cases, as shown in Table 8 below.

[Table 8]

| | Number of Tx Chains (Band A + Band B) | Number of antenna ports for UL transmission Band A(Carrier 1)+Band B(Carrier 2) | | |
|---|---|---|---|---|
| Case 1 | 1T+1T | 1P+1P | 1P+0P | 0P+1P |
| Case 2 | 2T+0T | 2P+0P | 1P+0P | |
| Case 3 | 0T+2T | 0P+2P | | 0P+1P |

- In Table 8, "Number of Tx Chains" represents a state where Tx chains are connected to each of the two bands. If two Tx chains are connected to a band, it is represented as '2T'. If one Tx chain is connected, it is represented as '1T', and if no Tx chain is connected, it is represented as '0T'. For example, "1T+1T" in Case 1 means that one Tx chain is connected to both Band A and Band B. "2T+0T" in Case 2 means that two Tx chains are connected only to Band A.
- In Table 8, "Number of antenna ports for UL transmission" refers to the number of antenna ports for UL transmission on each of the two bands. If 2 antenna ports are used for UL transmission on a band, it is represented as '2P'. If 1 antenna port is used for UL transmission, it is represented as '1P', and if no UL transmission occurs, it is represented as '0P'. For example, "1P+1P" in Case 1 means that 1-port UL transmission occurs on both Band A and Band B. "1P+0P" in Case 1 means that 1-port UL transmission occurs only on Band A. "0P+1P" means that 1-port UL transmission occurs only on Band B.
- In Table 8, when the state of Tx chains is the same as Case 1, if "1P+1P" occurs on Band A and Band B, the UL Tx switching is not triggered. Additionally, if "2P+0P" occurs in the Case state 2, or if "0P+2P" occurs in the Case 3 state, the UL Tx switching is not triggered.
- In Table 8, when the state of Tx chains is the same as Case 1, if "2P+0P" (or "0P+2P") occurs, the UL Tx switching is triggered, and the Tx chain of Band B (or Band A) switches to Band A (or Band B). Additionally, in the Case 2 state, if "1P+1P" occurs, the UL Tx switching is triggered, and one Tx chain of Band A switches to Band B. In the Case 2 state, if "0P+2P" occurs, the UL Tx switching is triggered, and two Tx chains of Band A switch to Band B.
- In Table 8, when the state of Tx chains is the same as Case 1, if "1P+0P" occurs or if "0P+1P" occurs, the UL Tx switching may not be triggered. This is because, in the Case 1 state, one Tx chain is connected to both Band A and Band B, and thus UL transmission corresponding to "1P+0P" and/or "0P+1P" is possible even if the UL Tx switching does not occur.

Meanwhile, in the Case 2 state of Table 8, if 1-port UL transmission occurs on Band B, the UL Tx switching may be triggered. However, if two Tx chains connected to Band A switch to Band B, the state change to Case 3. If only one Tx chain switches to Band B, the state may change to Case 1. That is, while 1-port UL transmission occurring on Band B triggers the UL Tx switching, the state after the UL Tx switching is not uniquely determined. As a similar example, when 1-port UL transmission occurs on Band A in the Case 3 state of Table 8, the state after the UL Tx switching may either be Case 1 or Case 2.

To address this issue, conventional 3GPP Rel-17 has introduced the RRC parameter uplinkTxSwitching-DualUL-TxState. When the RRC configuration value is set to 'oneT', the UE may be configured to switch to Case 1. When the RRC configuration value is set to 'twoT', the UE may be configured to switch to Case 2 or Case 3. Accordingly, the state of Tx chains may be uniquely determined after the UL Tx switching.

**[1] Issues in Three Bands**

Section [1] explains an issue where, after UL Tx switching is triggered due to 1-port UL transmission among three bands, the state of Tx chains is impossible to be uniquely determined.

When the UL Tx switching is configured among three bands, the UL Tx switching may be configured/defined in the following six cases as shown in Table 9.

[Table 9]

| | Number of Tx Ch ains (Band A + Band B + Band C) | Number of antenna ports for UL transmission Band A(Carrier 1)+Band B(Carrier 2)+Band C(Carrier 3) | | | |
|---|---|---|---|---|---|
| Case 1 | 1T+1T+0T | 1P+1P+0P | 1P+0P+0P | 0P+1P+0P | |
| Case 2 | 0T+1T+1T | 0P+1P+1P | | 0P+1P+0P | 0P+0P+1P |
| Case 3 | 1T+0T+1T | 1P+0P+1P | 1P+0P+0P | | 0P+0P+1P |
| Case 4 | 2T+0T+0T | 2P+0P+0P | 1P+0P+0P | | |
| Case 5 | 0T+2T+0T | 0P+2P+0P | | 0P+1P+0P | |
| Case 6 | 0T+0T+2T | 0P+0P+2P | | | 0P+0P+1P |

Except for that the relevant bands increase to Band A, Band B, and Band C, all notations are the same as in Table 8.

In this case, the issue that the state of Tx chains is not uniquely determined after the UL Tx switching may still occur. For example, in the Case 1 state, if 1-port UL transmission occurs on Band C, the state of Tx chains after the UL Tx switching may be Case 2, Case 3, or Case 6.

Additionally, even if the conventional RRC parameter uplinkTxSwitching-DualUL-TxState is used, the issue is not resolved. In the example above, if the RRC parameter is set to 'twoT', the Tx chain switches to Case 6. However, if the RRC parameter is set to 'oneT', the state of Tx chains after the UL Tx switching may be Case 2 or Case 3.

In Table 9, cases where the values of "Number of antenna ports for UL transmission" are the same for a specific case, Case X may be considered as this issue (e.g., Case 1/3/4 for "1P+0P+0P", Case 1/2/5 for "0P+1P+0P", or Case 2/3/6 for "0P+0P+1P").

**[2] Issues in Four Bands**

Section [2] explains the issue where, after UL Tx switching is triggered due to 1-port UL transmission between four bands, the state of Tx chains is impossible to be uniquely determined.

When the UL Tx switching is configured among four bands, the UL Tx switching may be configured/defined in the following ten cases as shown in Table 10.

[Table10]

| | Number of Tx Chains (Band A + Band B + Band C + Band D) | Number of antenna ports for UL transmission Band A(Carrier 1)+Band B(Carrier 2)+Band C(Carrier 3) +Band D(Carrier 4) | | | | |
|---|---|---|---|---|---|---|
| Case 1 | 1T+1T+0T+0T | 1P+1P+0P+0P, | 1P+0P+0P+0P | 0P+1P+0P+0P | | |
| Case 2 | 0T+1T+1T+0T | 0P+1P+1P+0P, | | 0P+1P+0P+0P | 0P+0P+1P+0P | |
| Case 3 | 0T+0T+1T+1T | 0P+0P+1P+1P, | | | 0P+0P+1P+0P | 0P+0P+0P+1P |
| Case 4 | 1T+0T+0T+1T | 1P+0P+0P+1P, | 1P+0P+0P+0P | | | 0P+0P+0P+1P |
| Case 5 | 1T+0T+1T+0T | 1P+0P+1P+0P, | 1P+0P+0P+0P | | 0P+0P+1P+0P | |
| Case 6 | 0T+1T+0T+1T | 0P+1P+0P+1P, | | 0P+1P+0P+0P | | 0P+0P+0P+1P |
| Case 7 | 2T+0T+0T+0T | 2P+0P+0P+0P, | 1P+0P+0P+0P | | | |

(continued)

| | Number of Tx Chains (Band A + Band B + Band C + Band D) | Number of antenna ports for UL transmission Band A(Carrier 1)+Band B(Carrier 2)+Band C(Carrier 3) +Band D(Carrier 4) | | | | |
|---|---|---|---|---|---|---|
| Case 8 | 0T+2T+0T+0T | 0P+2P+0P+0P, | | 0P+1P+0P+0P | | |
| Case 9 | 0T+0T+2T+0T | 0P+0P+2P+0P, | | | 0P+0P+1P+0P | |
| Case 10 | 0T+0T+0T+2T | 0P+0P+0P+2P, | | | | 0P+0P+0P+1P |

Except for that the relevant bands increase to Band A, Band B, Band C, and Band D, all notations are the same as in Table 8 and Table 9.

In this case, the issue that the state of Tx chains is not uniquely determined after the UL Tx switching may still occur. For example, in the Case 1 state, if 1-port UL transmission occurs on Band C, the state of Tx chains after the UL Tx switching may be Case 2, Case 3, Case 5, or Case 9.

Additionally, even if the conventional RRC parameter uplinkTxSwitching-DualUL-TxState is used, the issue is not resolved. In the above example, if the RRC parameter is set to 'twoT', the Tx chain switches to Case 9. However, if the RRC parameter is set to 'oneT', the state of Tx chains after the UL Tx switching may be Case 2, Case 3, or Case 5.

In Table 10, cases where the values of "Number of antenna ports for UL transmission" are the same for a specific case, Case X may be considered as this issue (e.g., Case 1/4/5/7 "1P+0P+0P+0P", Case 1/2/6/8 for "0P+1P+0P+0P", Case 2/3/5/9 for "0P+0P+1P+0P", or Case 3/4/6/10 for "0P+0P+0P+1P").

### [3] Proposed Methods

In relation to UL Tx switching across three or four bands mentioned in Sections [1] and [2], Section [3] proposes a solution to the issue where, after the UL Tx switching is triggered due to 1-port UL transmission, the state of Tx chains is impossible to be uniquely determined.

In the proposed method described later, bands A, B, C, and D are not terms referring to specific bands, but rather may be understood as arbitrary bands where the UL Tx switching is configured. Additionally, bands A, B, C, and D may be understood as the bands mentioned in Table 9 and Table 10 of Sections [1] and [2].

In the following method, when a specific band where the Tx chain will be positioned or switched is configured through RRC, the specific band may be the same as the band where 1-port UL transmission is scheduled. For example, in a situation where two Tx chains are not present on Band A, if 1-port UL transmission is scheduled on Band A and triggers the UL Tx switching, one of the two Tx chains of the UE may move to Band A, while the other may move to a specific band, Band Z. In this case, Band Z may be configured for each band through RRC, and Band Z may also be set to Band A.

In the following method, when a specific band where the Tx chain will be positioned or switched is configured through RRC, the specific band may be one of bands having a dualUL relationship with the band where 1-port UL transmission is scheduled. For example, in a situation where two Tx chains are not present on Band A, if 1-port UL transmission is scheduled on Band A and triggers the UL Tx switching, one of the two Tx chains of the UE may move to Band A, while the other may move to a specific band, Band Z. In this case, Band Z may be set for each band through RRC. Band Z may be one of the bands having the dualUL relationship with Band A. The UE may not expect that the band having a switchedUL relationship with Band A will be set to Band Z. Alternatively, in a situation where two Tx chains are not present on Band A, when the band having the switchedUL relationship with Band A is set to Band Z, if 1-port UL transmission is scheduled on band A, and as a result, the UL Tx switching is triggered, the two Tx chains may move to band A.

[3-1] In a situation where there are two Tx chains on a specific band (e.g., Band A), and 1-port UL transmission occurs only on a band (i.e., Band X) other than Band A, the following methods may be applied. Specifically, at least one of the methods (or a combination of two or more methods) may be applied.

- Method 1: As the state of Tx chains after the UL Tx switching, the UE assumes that the two Tx chains are located on the band (=X). In other words, in a situation where the cases that may occur after the UL Tx switching are not unique, as mentioned in Sections [1] and [2], the UE changes to a state where the two Tx chains are connected to Band X.

- Method 2: As the state of Tx chains after the UL Tx switching, the UE assumes that one Tx chain is located on the band (=X) and the other Tx chain is located on the band (=A) where the two Tx chains were previously present. In other words, in a situation where the cases that may occur after the UL Tx switching are not unique, as mentioned in Sections [1] and [2], the UE changes to a state where one Tx chain is connected to Band A, where the two Tx chains is connected before the UL Tx switching, and the other Tx chain is connected to Band X, where 1-port UL transmission occurs.

- Method 3: As the state of Tx chains after the UL Tx switching, the UE assumes that one Tx chain is located on the band (=X) and the other Tx chain is located on a specific band. In other words, in a situation where the cases that may occur after the UL Tx switching are not unique, as mentioned in Sections [1] and [2], the UE changes to a state where one Tx chain is connected to Band X, where 1-port UL transmission occurs, and the other Tx chain is connected to a specific band.

    ■ In this case, the specific band may be determined as follows.

        ♦ Opt1: The specific band is predefined. The specific band may be determined as a band with the lowest or highest cell/carrier index among the bands excluding Band X. Alternatively, the specific band may be determined as a band with the lowest or highest frequency among the bands excluding Band X.
        ♦ Opt2: The specific band may be configured through separate RRC.

        • In this case, the specific band may be one of the bands having the dualUL relationship with the band where 1-port UL transmission is scheduled.

        ♦ Opt3: When 1-port UL transmission on Band X is scheduled through DCI, the specific band may be configured/indicated through the corresponding DCI.

- Method 4: The conventional 3GPP Rel-17 RRC parameter "uplinkTxSwitching-DualUL-TxState" is (re)used.

    ■ Opt-1: When "uplinkTxSwitching-DualUL-TxState" is set to 'twoT', the UL Tx switching is performed such that the two Tx chains are located on Band X, where 1-port UL transmission occurs, according to Method 1. When "uplinkTxSwitching-DualUL-TxState" is set to 'oneT', the UL Tx switching is performed such that one Tx chain is located on Band A, where the two Tx chains were connected before the UL Tx switching, and the other Tx chain is located on Band X, where 1-port UL transmission occurs, according to Method 2.
    ■ Opt-2: When "uplinkTxSwitching-DualUL-TxState" is set to 'twoT', the UL Tx switching is performed such that the two Tx chains are located on Band X, where 1-port UL transmission occurs, according to Method 1. When "uplinkTxSwitching-DualUL-TxState" is set to 'oneT', the UL Tx switching is performed such that one Tx chain is located on a specific band determined according to Method 3, and the other Tx chain is located on Band X, where 1-port UL transmission occurs.

        ♦ In this case, if simultaneous UL transmission does not occur on the specific band determined according to Method 3 and Band X where 1-port UL transmission occurs, or if it is configured or reported that simultaneous UL transmission on the two bands is not allowed, the UE may perform the UL Tx switching such that the two Tx chains are located on Band X.
        ♦ Alternatively, if simultaneous UL transmission does not occur on the specific band determined according to Method 3 and Band X where 1-port UL transmission occurs, or if it is configured or reported that simultaneous UL transmission on the two bands is not allowed, the UE may perform the UL Tx switching such that one Tx chain is located on Band X and the other Tx chain is located on one of the bands where simultaneous transmission with Band X is possible, according to the RRC configuration proposed in Opt-3 or the RRC configuration proposed in Opt-3 of Method 4 in [3-2].
        ♦ Alternatively, in this case, the UE may not expect 1-port UL transmission to be scheduled on Band X.
        ♦ In this case, the specific band determined according to Method 3 or the specific band configured for each band through the RRC configuration proposed in Opt-3 or the RRC configuration proposed in Opt-3 of Method 4 in [3-2] may be the same as Band X, where 1-port UL transmission occurs. In this case, even if only 1-port UL transmission is scheduled on Band X, the UE may perform the UL Tx switching such that the two Tx chains are located on Band X.

    ■ Opt-3: When "uplinkTxSwitching-DualUL-TxState" is set to 'twoT', the UL Tx switching is performed such that the two Tx chains are located on Band X, where 1-port UL transmission occurs, according to Method 1. When "uplinkTxSwitching-DualUL-TxState" is set to 'oneT', the UL Tx switching is performed such that Tx chain(s) are located on one or two specific bands. In this case, the specific one or two bands may be configured through separate RRC (referred to as "UTS-TxState-Ext-1"). "UTS-TxState-Ext-1" may configure/indicate one band where the two Tx chains are located or one of the combinations of two bands where each band has one Tx chain located, which may be determined by Method 1, Method 2, and/or Method 3.

  ▪ In this case, the specific band for Band X, configured/indicated through "UTS-TxState-Ext-1," may be the band where 1-port UL transmission occurs, which is Band X. That is, when 1-port UL transmission occurs on Band X, if the two Tx chains are located on Band Y_0 (where Y_0 is a band different from X), if the switching option is set to 'dualUL', and if "uplinkTxSwitching-DualUL-TxState" is set to 'oneT', one of the Tx chains located on Band Y_0 may switch to Band X, and the other Tx chain may switch to the specific band configured/indicated through "UTS-TxState-Ext-1". If the specific band for Band X is configured/indicated as Band X through "UTS-TxState-Ext-1," even though "uplinkTxSwitching-DualUL-TxState" is set to 'oneT', the two Tx chains of the UE may switch to Band X.

Opt-3 may be generalized as follows. Whether the UL Tx switching is performed such that the two Tx chains are located on Band X where 1-port UL transmission occurs, or whether the UL Tx switching is performed such that one Tx chain is located on Band X where 1-port UL transmission occurs and the other Tx chain is located on another specific band may be configured through RRC (in this case, the specific band may be configured as wells).

The RRC configurations in Method 3 or Method 4 may configure the specific band for each band configured for the UE (or for each band where the UL Tx switching is configured).

For example, for three bands, a specific band for Band A may be set to Band B, a specific band for Band B may be set to Band C, and a specific band for Band C may be set to Band A. In this configuration, when two Tx chains are present on Band A and 1-port UL transmission occurs on Band B, one Tx chain may switch to Band B, and the other Tx chain may switch to Band C. Alternatively, if 1-port UL transmission occurs on Band C, one Tx chain may switch to Band C, and the other Tx chain may remain on Band A.

In this case, the specific band configured for each band may be one of the bands where it is configured or reported that simultaneous UL transmission is allowed.

Alternatively, the specific band configured for each band may be the same as each band. In this case, if UL transmission occurs on the corresponding band and Tx chain(s) need to switch to the corresponding band, the UE may switch the two Tx chains to the corresponding band, even if the scheduled UL transmission on the corresponding band is 1-port UL transmission. Alternatively, in this case, the UE may not expect 1-port UL transmission to be scheduled on the corresponding band.

If there is no other band available for simultaneous transmission with a given band (= Band X1), the BS may not configure the specific band for Band X1. When UL transmission occurs on Band X1 and Tx chain(s) need to switch to Band X1, the UE may switch the two Tx chains to Band X1, even if the scheduled UL transmission on Band X1 is 1-port UL transmission. Alternatively, in this case, the UE may not expect 1-port UL transmission to be scheduled on Band X1.

The above RRC configuration may be the same as the RRC configuration proposed in [3-2] (for example, Opt2 of Method 3 in [3-2]). Alternatively, the above RRC configuration may be used for a scenario where there are two Tx chains on a specific band (e.g., Band A) and may not be applicable to a scenario where there is one Tx chain on each of two specific bands (e.g., Band A and Band B), which is proposed in [3-2].

[3-2] In a scenario where there is one Tx chain on each of the two specific bands (e.g., Band A and Band B), if 1-port UL transmission occurs only on a band (Band Y) other than Band A or Band B, the following methods may be applied. Specifically, at least one of the methods or a combination of two or more methods may be applied.

- Method 1: As the state of Tx chains after the UL Tx switching, the UE assumes that the two Tx chains are located on the band (=Y). In other words, in a situation where the cases that may occur after the UL Tx switching are not unique, as mentioned in Sections [1] and [2], the UE changes to a state where the two Tx chains are connected to Band Y.
- Method 2: As the state of Tx chains after the UL Tx switching, the UE assumes that one Tx chain is located on the band (=Y) and the other Tx chain is located on one specific band (Band A or B) among the bands where the previous one Tx chain is connected. In other words, in a situation where the cases that may occur after the UL Tx switching are not unique, as mentioned in Sections [1] and [2], the UE changes to a state where one Tx chain is connected to one specific band among the bands where the previous one Tx chain is connected, and the other Tx chain is connected to Band Y where 1-port UL transmission occurs. In this case, the specific band between Band A and Band B may be configured through separate RRC or determined by a predefined rule.

  ▪ Examples of the predefined rule:

    ◆ A band with a cell/carrier having the lowest or highest index among cells/carriers in each band is selected from Band A and Band B. Alternatively, a band on the lowest or highest frequency may be determined.
    ◆ A band that has a smaller frequency gap from Band Y is selected from Band A and Band B.
    ◆ A band where the most recent UL transmission is performed before 1-port UL transmission on Band Y is selected from Band A and Band B.

♦ A band where configured UL transmission is set through higher layer signaling such as RRC signaling is selected from Band A and Band B.

- Method 3: As the state of Tx chains after the UL Tx switching, the UE assumes that one Tx chain is located on the band (=X) and the other Tx chain is located on a specific band. In other words, in a situation where the cases that may occur after the UL Tx switching are not unique, as mentioned in Sections [1] and [2], the UE changes to a state where one Tx chain is connected to Band Y, where 1-port UL transmission occurs, and the other Tx chain is connected to a specific band.

   ■ In this case, the specific band may be determined as follows.

      ♦ Opt1: The specific band is predefined. The specific band may be determined as a band with the lowest or highest cell/carrier index among the bands excluding Band Y. Alternatively, the specific band may be determined as a band with the lowest or highest frequency among the bands excluding Band Y.
      ♦ Opt2: The specific band may be configured through separate RRC.
      ♦ Opt3: When 1-port UL transmission on Band Y is scheduled through DCI, the specific band may be configured/indicated through the corresponding DCI.

- Method 4: The conventional 3GPP Rel-17 RRC parameter "uplinkTxSwitching-DualUL-TxState" is (re)used.

   ■ Opt-1: When "uplinkTxSwitching-DualUL-TxState" is set to 'twoT', the UL Tx switching is performed such that the two Tx chains are located on Band Y, where 1-port UL transmission occurs, according to Method 1. When "uplinkTxSwitching-DualUL-TxState" is set to 'oneT', the UL Tx switching is performed such that one Tx chain is located on a band determined according to Method 2 and the other Tx chain is located on Band Y, where 1-port UL transmission occurs.
   ■ Opt-2: When "uplinkTxSwitching-DualUL-TxState" is set to 'twoT', the UL Tx switching is performed such that the two Tx chains are located on Band Y, where 1-port UL transmission occurs, according to Method 1. When "uplinkTxSwitching-DualUL-TxState" is set to 'oneT', the UL Tx switching is performed such that one Tx chain is located on a specific band determined according to Method 3, and the other Tx chain is located on Band Y, where 1-port UL transmission occurs.
   ■ Opt-3: When "uplinkTxSwitching-DualUL-TxState" is set to 'twoT', the UL Tx switching is performed such that the two Tx chains are located on Band Y, where 1-port UL transmission occurs, according to Method 1. When "uplinkTxSwitching-DualUL-TxState" is set to 'oneT', the UL Tx switching is performed such that Tx chain(s) are located on one or two specific bands. In this case, the specific one or two bands may be configured through separate RRC (referred to as "UTS-TxState-Ext-2"). "UTS-TxState-Ext-2" may configure/indicate one band where the two Tx chains are located or one of the combinations of two bands where each band has one Tx chain located, which may be determined by Method 1, Method 2, and/or Method 3.
      ■ In this case, the specific band for Band X, configured/indicated through "UTS-TxState-Ext-1," may be the band where 1-port UL transmission occurs, which is Band X. That is, when 1-port UL transmission occurs on Band X, if the two Tx chains are located on Band Y_1 and Band Y_2 (where Y_1 and Y_2 are bands different from Band X), if the switching option is set to 'dualUL', and if "uplinkTxSwitching-DualUL-TxState" is set to 'oneT', one Tx chain located on Band Y_1 or Y_2 may switch to Band X, and the other Tx chain, located on Band Y_2 or Y_1, may switch to the specific band configured/indicated through "UTS-TxState-Ext-1." If the specific band for Band X is configured/indicated as Band X through "UTS-TxState-Ext-1," even though "uplinkTxSwitching-DualUL-TxState" is set to 'oneT', the two Tx chains of the UE may switch to Band X.

Opt-3 may be generalized as follows. Whether the UL Tx switching is performed such that the two Tx chains are located on Band Y where 1-port UL transmission occurs, or whether the UL Tx switching is performed such that one Tx chain is located on Band Y where 1-port UL transmission occurs and the other Tx chain is located on another specific band may be configured through RRC (in this case, the specific band may be configured as wells).

The RRC configurations in Method 3 or Method 4 may configure the specific band for each band configured for the UE (or for each band where the UL Tx switching is configured).

For example, for four bands, a specific band for Band A may be set to Band B, a specific band for Band B may be set to Band C, a specific band for Band C may be set to Band D, and a specific band for Band D may be set to Band A. In this configuration, when one Tx chain is located on Band A and the other Tx chain is located on Band B, if 1-port UL transmission occurs on Band C, one Tx chain may switch to Band C, and the other Tx chain may switch to Band D. Alternatively, if 1-port UL transmission occurs on Band D, one Tx chain may switch to Band D, and the other Tx chain may remain on Band A.

In this case, the specific band configured for each band may be one of the bands where it is configured or reported that simultaneous UL transmission is allowed.

Alternatively, the specific band configured for each band may be the same as each band. In this case, if UL transmission occurs on the corresponding band and Tx chain(s) need to switch to the corresponding band, the UE may switch the two Tx chains to the corresponding band, even if the scheduled UL transmission on the corresponding band is 1-port UL transmission. Alternatively, in this case, the UE may not expect 1-port UL transmission to be scheduled on the corresponding band.

If there is no other band available for simultaneous transmission with a given band (= Band X1), the BS may not configure the specific band for Band X1. When UL transmission occurs on Band X1 and Tx chain(s) need to switch to Band X1, the UE may switch the two Tx chains to Band X1, even if the scheduled UL transmission on Band X1 is 1-port UL transmission. Alternatively, in this case, the UE may not expect 1-port UL transmission to be scheduled on Band X1.

The above RRC configuration may be the same as the RRC configuration proposed in [3-1] (for example, Opt2 of Method 3 in [3-1]). Alternatively, the above RRC configuration may be used for a scenario where there is one Tx chain on each of two specific bands (e.g., Band A and Band B) and may not be applicable to a scenario where there are two Tx chains on a specific band (e.g., Band A), which has been proposed in [3-1].

[3-3] By combining one or more of the methods proposed in [3-1] and one or more of the methods proposed in [3-2], the UL Tx switching operations may be configured for three or four bands.

- For example, when 1-port UL transmission occurs on Band Z other than Band A, if the state of Tx chains before the UL Tx switching is that two Tx chains are on Band A, the UL Tx switching may be performed such that one Tx chain is located on Band A and the other Tx chain is located on Band Z according to Method 2 in [3-1]. If the state of the Tx chains before the UL Tx switching is that one Tx chain is located on Band A and the other Tx chain is located on Band B, the UL Tx switching may be performed such that the two Tx chains are located on Band Z according to Method 1 in [3-2].

- As another example, when 1-port UL transmission occurs on Band Z other than Band A, if the state of the Tx chains before the UL Tx switching is that the two Tx chains are on Band A, the UL Tx switching may be performed such that one Tx chain is located on Band A and the other Tx chain is located on Band Z according to Method 2 in [3-1]. If the state of the Tx chains before the UL Tx switching is that one Tx chain is located on Band A and the other Tx chain is located on Band B, the UL Tx switching may be performed such that one Tx chain is located on a band determined and the other Tx chain is located on Band Z according to Opt 2 of Method 3 in [3-2].

- As another example, when 1-port UL transmission occurs on Band Z other than Band A, if "uplinkTxSwitching-DualUL-TxState" is set to 'twoT', the UL Tx switching may be performed such that the two Tx chains are located on Band Z. If the RRC parameter is set to 'oneT', the UL Tx switching may be performed such that one Tx chain is located on Band Z and the other Tx chain is located on a specific band determined by one of the methods in [3-1] or [3-2].

[3-4] The proposed methods in [3-1] to [3-3] may be applied only to a specific option of the "simultaneous transmission options" (i.e., 'switchedUL' or 'dualUL') configured for the UL Tx switching. For example, the above proposed methods may be applied only to a band combination where the UL Tx switching is configured such that dualUL is enabled for the UE.

[3-5] In Rel-17, the RRC parameter uplinkTxSwitching-DualUL-TxState may be set to either 'oneT' or 'twoT' through Cell GroupConfig. Additionally, the RRC parameter uplinkTxSwitching-DualUL-TxState may apply to bands where dualUL is configured. In this case, the dualUL configuration is also performed through CellGroupConfig. When 'oneT' is configured for the band where dualUL is configured, if 1-port UL transmission is scheduled on a specific band, which triggers the UL Tx switching, one Tx chain may be located on each of two bands after switching. If 'twoT' is configured, the UL Tx switching may be performed such that two Tx chains are located on the band where 1-port UL transmission is scheduled. Meanwhile, since the UL Tx switching between two bands is defined in Rel-17, even if the dualUL configuration is performed through CellGroupConfig and the uplinkTxSwitching-DualUL-TxState configuration is applied, it may have the same effect as the configuration of a band pair (i.e., the configuration of two bands).

In Rel-18, since the UL Tx switching may be performed such that Tx chains are located on one or two bands among a maximum of four bands, the number of possible cases for the UL Tx switching may vary depending on whether the dualUL configuration is performed through CellGroupConfig or on a band pair basis. Additionally, while simultaneous UL transmission was always possible between two bands where dualUL is configured in Rel-17, it has not been determined whether simultaneous UL transmission is always to be possible between two bands where dualUL is configured in Rel-18. Therefore, considering cases where the dualUL configuration and simultaneous transmission configuration differ, it may be determined whether uplinkTxSwitching-DualUL-TxState is configured at the CellGroupConfig level, at the band pair level, or at the individual band level.

(1) If the dualUL configuration is performed through CellGroupConfig, and simultaneous transmission is always possible on any band pair within bands where dualUL is configured (e.g., band combination), uplinkTxSwitching-DualUL-TxState may be configured through CellGroupConfig. In other words, for Rel-18 the UL Tx switching, the dualUL configuration, simultaneous transmission configuration, and oneT/twoT configuration may all be performed through CellGroupConfig as in Rel-17.

(2) If the dualUL configuration is performed through CellGroupConfig, and if the simultaneous transmission configuration for any band pair within bands where dualUL is configured (e.g., band combination) is determined through separate RRC, Alt-1 or Alt-2 may be possible.

- Alt-1: uplinkTxSwitching-DualUL-TxState may be configured through Cell GroupConfig.
- Alt-2: uplinkTxSwitching-DualUL-TxState may be configured on a band pair basis.

When Alt-1 is applied, a specific band pair may be configured such that simultaneous transmission is not allowed even if dualUL and oneT are configured (for a band combination that includes the band). In this case, the RRC configuration methods described in [3-1] to [3-5] may be applied. For example, when the UL Tx switching is configured for three bands: Bands A/B/C, and when dualUL and oneT are configured for Bands A/B/C, it may be considered that simultaneous transmission is allowed or not allowed on Band A and Band B.

- When simultaneous transmission is allowed,

    ■ If there are two Tx chains on Band A and 1-port UL transmission is scheduled on Band B, the state may be changed such that one Tx chain is located on Band A and the other Tx chain is located on Band B after the UL Tx switching because 'oneT' is configured.

- When simultaneous transmission is not allowed,

If there are two Tx chains on Band A and 1-port UL transmission is scheduled on Band B, since the state where one Tx chain is located on Band A and the other Tx chain is located on Band B does not exist, the state may not be changed such that one Tx chain is located on each of Band A and Band B even if 'oneT' is configured. Therefore, in this case, the UE may operate as follows.

    ♦ Opt 1) Even though 'oneT' is configured, in this case, the UE may exceptionally operate such that the two Tx chains are located on Band B. Alternatively,
    ♦ Opt 2) (As mentioned in the proposed method above) by preconfiguring a specific band for Band B (preferably a band that is capable of simultaneous transmission with Band B), the UE may operate such that one Tx chain is located on the preconfigured specific band and the other Tx chain is located on Band B (if 1-port transmission from the two Tx chains on Band A, where simultaneous transmission is not allowed, to Band B is required). Alternatively,
    ♦ Opt 3) When there are two Tx chains on Band A, the UE may not expect 1-port UL transmission to be scheduled on Band B, where simultaneously transmission with Band A is impossible (if such scheduling DCI is received, the UE may operate by discarding (ignoring) the DCI.)

(3) If the dualUL configuration is performed on a band pair basis, and if simultaneous transmission is always possible on band pairs where the dual configuration is configured, uplinkTxSwitching-DualUL-TxState may be configured on a band pair basis. That is, for Rel-18 the UL Tx switching, the dualUL configuration, simultaneous transmission configuration, and oneT/twoT configuration may all be configured on a band pair basis.

The contents of the present disclosure are not limitedly applied only to UL and/or DL signal transmission and reception. For example, the contents of the present disclosure may also be used for direct communication between UEs. In this document, the term base station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

Implementation examples

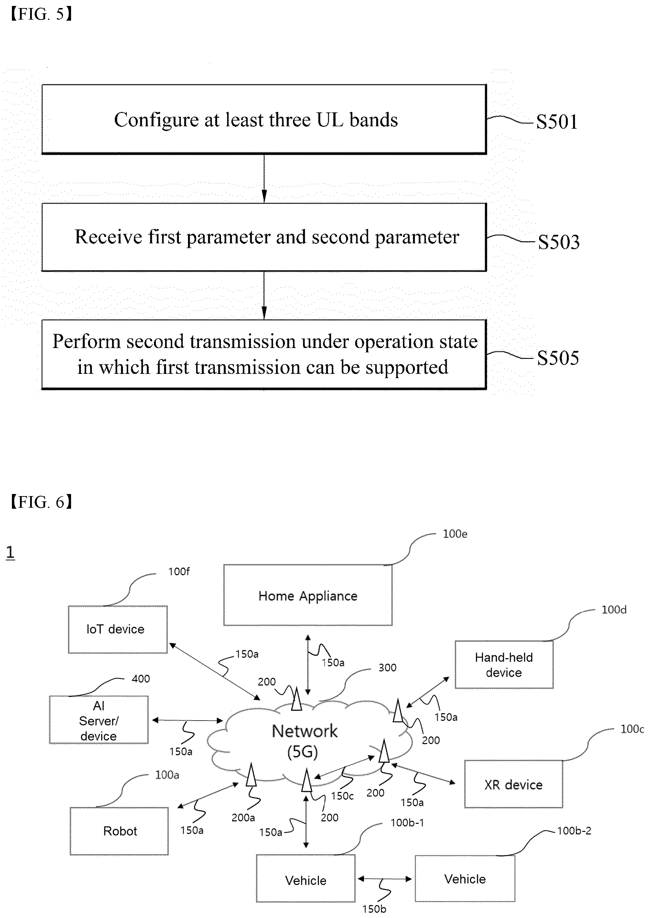

FIG. 5 is a flowchart of a signal transmission and reception method according to embodiments of the present disclosure.

Referring to FIG. 5, the signal transmission and reception method according to the embodiments of the present disclosure may be performed by a UE. The method may include: configuring at least three UL bands (S501); receiving a first parameter and a second parameter (S503); and performing second transmission in an operational state capable of supporting first transmission (S505). A signal transmission and reception method by a BS corresponding to the embodiments of the present disclosure in FIG. 5 may include: configuring at least three UL bands for a UE (S501); transmitting a first parameter and a second parameter (S503); and receiving second transmission from a UE in an operational state capable of supporting first transmission (S505).

The at least three UL bands include at least a first band, a second band, and a third band. Depending on the number of UL bands, additional UL bands from a fourth band to an N-th band may also be included.

The first transmission is transmission performed before UL switching, and the second transmission is transmission performed after the UL switching. If one or more of the bands on which the first transmission is performed is different from the bands on which the second transmission is performed, the UL switching (UL Tx switching) needs to be performed such that one or more of the two Tx chains of the UE switch to a different band. For reference, in the embodiments of the present disclosure, it is not necessary for the first transmission to be performed between the UE and the BS. For any reason, if the location of the Tx chains of the UE is in the operational state capable of supporting the first transmission, the embodiments of the present disclosure may be implemented even if the first transmission is not actually performed. This is also applied to third transmission, which will be described below.

The first parameter refers to an RRC parameter uplinkTxSwitching-DualUL-TxState. Referring to conventional 3GPP TS 38.331, this parameter is used to indicate the steady state of Tx chains after the UL switching when the state of the Tx chains is not unique after the UL switching. If the value of the parameter indicates one Tx chain (i.e., the value of the parameter is 'oneT'), the BS and/or UE may assume that after the UL switching, two Tx chains are each connected/located on carrier(s) of each band. If the parameter is not configured or if the value of the parameter indicates two Tx chains (i.e., the value of the parameter is 'twoT'), the BS and/or UE may assume that after the UL switching, the two Tx chains are connected/located on carrier(s) of a single band.

(uplinkTxSwitching-DualUL-TxState indicates the state of Tx chains if the state of Tx chains after the UL Tx switching is not unique in case of 2Tx-2Tx switching is configured and uplinkTxSwitchingOption is set to dualUL. Value oneT indicates 1Tx is assumed to be supported on the carriers on each band, value twoT indicates 2Tx is assumed to be supported on that carrier.)

The second parameter is an RRC parameter used to configure a band associated with the band on which 1-port transmission is performed after the UL switching, which may be named "AssociatedBand."

In addition to the operations of FIG. 5, one or more of the operations described in Sections [0] to [3] may be performed.

For example, referring to Section [3-2] of this specification, when each of two specific bands has one Tx chain, 1-port UL transmission occurs on another band. Therefore, according to the example in Section [3-2], the first transmission corresponds to 1-port transmission performed on carrier(s) of each of the first band (or Band A) and the second band (or Band B). The second transmission corresponds to 1-port transmission performed on carrier(s) of the third band (or Band Y).

Additionally, referring to Opt-2 of Method 4 in Section [3-2], if the first parameter is set to 'oneT', that is, if the first parameter indicates one Tx chain, after the UL switching, one Tx chain may be located on a specific band determined according to Method 3, and the other Tx chain may be located on Band 3, where 1-port UL transmission occurs. Referring to Opt-2 of Method 3 in Section [3-2], the specific band is configured through RRC signaling. The specific band corresponds to the associated band, and the RRC signaling for configuring the specific band may include the second parameter. The associated band may be the first band or the second band. Additionally, the associated band may be another band, excluding the first to third bands.

Thus, the Tx chains that were located on the first and second bands before the UL switching are located on the third band and the associated band, respectively, after the UL switching.

In other words, when the UE is in an operational state capable of supporting 1-port transmission (first transmission) on the carrier(s) of each of the first and second bands, and when 1-port transmission (second transmission) is performed on the carrier(s) of the third band without any transmission on the first and second bands (or without transmission on all bands except for the third band), if the value of the first parameter indicates one Tx chain and the associated band is configured by the second parameter, the UE may consider that for the UL switching, 1-port transmission is performed on the carrier(s) of each of the third band and the associated band.

(If the UE is configured with uplinkTxSwitching-DualUL-TxState set to 'oneT', when the UE is under the operation state in which 1-port transmission may be supported on one carrier on the 1st band and the 2nd band followed by no transmission on any carrier on these two bands and 1-port transmission on the other carrier on the 3rd band the UE shall consider this as if 1-port transmission was transmitted on the 3rd band and the band associated with the 3rd band as configured by AssociatedBand, otherwise the UE shall consider this as if 2-port transmission took place on the transmitting carrier).

Since the UE considers that 1-port transmission is performed on the carrier(s) of each of the third band and the associated band for the UL switching, rather than the actual second transmission, only the Tx chain is switched to the associated band, and no actual UL transmission occurs on the carrier(s) of the associated band.

Accordingly, if the UE is configured to consider that 1-port transmission has been performed on the carrier(s) of the associated band, the UE and BS may clearly identify the location of the Tx chain that is not used for actual transmission.

Hereinabove, it has been described that the associated band for the third band is configured through the second parameter. However, when 1-port transmission is first performed on the carrier(s) of the first band (or second band) and the third band, and then 1-port transmission is performed on the second band (or first band), the UL switching also needs to be performed smoothly. Therefore, the second parameter may be used to configure the associated band for each band among all the bands configured for the UE in relation to the UL switching.

If the first parameter is not configured or if the first parameter indicates 'twoT', i.e., two Tx chains, the two Tx chains that were respectively located on the first and second bands switch to the third band. The UE may consider this operation as 2-port transmission being performed on the carrier(s) of the third band for the UL switching.

Additionally, referring to Section [3-1] of this specification, when there are two Tx chains on a specific band, 1-port UL transmission occurs on another band. Therefore, according to the example in Section [3-1], the first transmission corresponds to 2-port transmission performed on the carrier(s) of the first band (or Band A). The second transmission corresponds to 1-port transmission performed on the carrier(s) of the third band (or Band X). When the operations of Sections [3-1] and [3-2] are combined, the transmissions corresponding to one of the sections may be referred to as the first transmission and the second transmission, while the transmissions corresponding to the other section may be referred to as the third transmission and fourth transmission.

Referring to Opt-2 of Method 4 in Section [3-1], if the first parameter is set to 'oneT', i.e., the first parameter indicates one Tx chain, after the UL switching, one Tx chain may be located on a specific band determined according to Method 3 and the other Tx chain may be located on Band 3, where 1-port UL transmission occurs. Referring to Opt-2 of Method 3 in Section [3-1], a specific band is configured through RRC signaling. The specific band corresponds to the associated band, and the RRC signaling for configuring the specific band may include the second parameter. The associated band may be the first band or the second band. Additionally, the associated band may be another band, excluding the first to third bands.

In other words, when the UE is in an operational state capable of supporting 2-port transmission (first transmission or third transmission) on the carrier(s) of the first band, and when 1-port transmission (second transmission or fourth transmission) is performed on the carrier(s) of the third band without any transmission on the first band (or without transmission on any bands except the third band), if the value of the first parameter indicates one Tx chain and the associated band is configured by the second parameter, the UE may consider that for the UL switching, 1-port transmission is performed on the carrier(s) of each of the third band and the associated band.

(If the UE is configured with uplinkTxSwitching-DualUL-TxState set to 'oneT', when the UE is under the operation state in which 2-port transmission may be supported on one carrier on one band followed by no transmission on any carrier on the same band and 1-port transmission on the other carrier on another band the UE shall consider this as if 1-port transmission was transmitted on both uplinks, otherwise the UE shall consider this as if 2-port transmission took place on the transmitting carrier.)

Since the UE considers that 1-port transmission is performed on the carrier(s) of each of the third band and the associated band for the uplink switching, rather than the actual second transmission (or fourth transmission), only the Tx chain is switched to the associated band, and no actual uplink transmission is performed on the carrier(s) of the associated band.

In addition to the operations described with respect to FIG. 5, one or more of the operations described with reference to FIGS. 1 to 4 and/or the operations described in sections [1] to [3] may be additionally performed in combination.

<u>Example of communication system to which the present disclosure is applied</u>

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g.,

5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

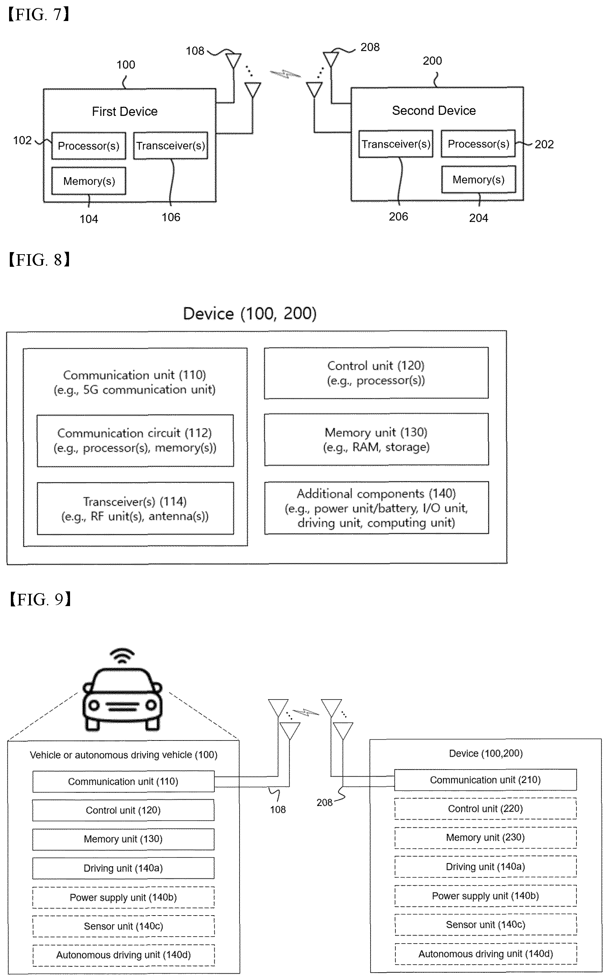

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

As described above, the present disclosure is applicable to various wireless communication systems.

## Claims

1. A method of transmitting and receiving signals by a user equipment (UE) in a wireless communication system, the method comprising:

   configuring uplink bands comprising a first band, a second band, and a third band;
   receiving (i) a first parameter for indicating a state of transmission (Tx) chains based on the state of the Tx chains after uplink switching being not unique, and (ii) a second parameter for configuring an associated band for the third band; and
   under an operation state in which 1-port transmission (first transmission) can be supported on each carrier on the first band and the second band, performing 1-port transmission (second transmission) on a carrier on the third band without transmission on the first band and the second band,
   wherein the uplink switching is performed based on the second transmission, and
   wherein based on a value of the first parameter indicating one Tx chain and the associated band being configured by the second parameter, the UE considers for the uplink switching that 1-port transmission is performed on each carrier on the third band and the associated band.

2. The method of claim 1, wherein based on that the UE considers that the 1-port transmission is performed on the each carrier on the third band and the associated band, Tx chains, which are originally located one in the first band and one in the second band, are switched to be located one in the third band and one in the associated band.

3. The method of claim 1, wherein a switching option between the third band and the associated band is configured to allow simultaneous transmission between the third band and the associated band.

4. The method of claim 1, wherein based on that the value of the first parameter is not configured or that the value of the first parameter indicates two Tx chains, the UE considers for the uplink switching that 2-port transmission is performed on the carrier on the third band.

5. The method of claim 4, wherein based on that the UE considers that the 2-port transmission is performed on the carrier on the third band, Tx chains, which are originally located one in the first band and one in the second band, are switched to be located entirely in the third band.

6. The method of claim 1, wherein the first parameter and the second parameter are received through radio resource control (RRC) signaling.

7. The method of claim 1, wherein the second parameter further comprises information about a second associated band associated with the first band and a third associated band associated with the second band.

8. The method of claim 1, further comprising, under an operational state in which 2-port transmission (third transmission) can be supported on a carrier on the first band, performing 1-port transmission (fourth transmission) on a carrier on the third band without transmission on the first band,

   wherein second uplink switching is performed based on the fourth transmission, and
   wherein based on the value of the first parameter indicating one Tx chain and the associated band being configured by the second parameter, the UE considers for the second uplink switching that 1-port transmission is performed on each carriers on the third band and the associated band.

9. The method of claim 8, wherein based on that the UE considers that the 1-port transmission is performed on the each carrier on the third band and the associated band, two Tx chains, which are originally located in the first band, are switched to be located one in the third band and one in the associated band.

10. A user equipment (UE) configured to transmit and receive signals in a wireless communication system, the UE comprising:

    at least one transceiver;
    at least one processor; and
    at least one memory operably connected to the at least one processor and storing instructions that, when executed, cause the at least one processor to perform specific operations comprising:

       configuring uplink bands comprising a first band, a second band, and a third band;
       receiving a first parameter for indicating a state of transmission (Tx) chains based on the state of the Tx chains after uplink switching being not unique, and (ii) a second parameter for configuring an associated band for the third band; and
       under an operation state in which 1-port transmission (first transmission) can be supported on each carrier on the first band and the second band, performing 1-port transmission (second transmission) on a carrier on the third band without transmission on the first band and the second band,
       wherein the uplink switching is performed based on the second transmission, and
       wherein based on a value of the first parameter indicating one Tx chain and the associated band being configured by the second parameter, the UE considers for the uplink switching that 1-port transmission is performed on each carrier on the third band and the associated band.

11. The UE of claim 10, wherein based on that the UE considers that the 1-port transmission is performed on the each carrier on the third band and the associated band, Tx chains, which are originally located one in the first band and one in the second band, are switched to be located one in the third band and one in the associated band.

12. The UE of claim 10, wherein a switching option between the third band and the associated band is configured to allow simultaneous transmission between the third band and the associated band.

13. The UE of claim 10, wherein based on that the value of the first parameter is not configured or that the value of the first parameter indicates two Tx chains, the UE considers for the uplink switching that 2-port transmission is performed on the carrier on the third band.

14. The UE of claim 113, wherein based on that the UE considers that the 2-port transmission is performed on the carrier on the third band, Tx chains, which are originally located one in the first band and one in the second band, are switched to be located entirely in the third band.

15. The UE of claim 10, wherein the first parameter and the second parameter are received through radio resource control (RRC) signaling.

16. The UE of claim 10, wherein the second parameter further comprises information about a second associated band for the first band and a third associated band for the second band.

17. The UE of claim 10, further comprising, under an operational state in which 2-port transmission (third transmission) can be supported on a carrier on the first band, performing 1-port transmission (fourth transmission) on a carrier on the third band without transmission on the first band,

wherein second uplink switching is performed based on the fourth transmission, and
wherein based on the value of the first parameter indicating one Tx chain and the associated band being configured by the second parameter, the UE considers for the second uplink switching that 1-port transmission is performed on each carriers on the third band and the associated band.

18. The UE of claim 17, wherein based on that the UE considers that the 1-port transmission is performed on the each carrier on the third band and the associated band, two Tx chains, which are originally located in the first band, are switched to be located one in the third band and one in the associated band.

19. An apparatus for a user equipment (UE), the apparatus comprising:

at least one processor; and
at least one computer memory operably connected to the at least one processor and configured to, when executed, cause the at least one processor to perform operations comprising:

configuring uplink bands comprising a first band, a second band, and a third band;
receiving a first parameter for indicating a state of transmission (Tx) chains based on the state of the Tx chains after uplink switching being not unique, and (ii) a second parameter for configuring an associated band for the third band; and
under an operation state in which 1-port transmission (first transmission) can be supported on each carrier on the first band and the second band, performing 1-port transmission (second transmission) on a carrier on the third band without transmission on the first band and the second band,
wherein the uplink switching is performed based on the second transmission, and
wherein based on a value of the first parameter indicating one Tx chain and the associated band being configured by the second parameter, the UE considers for the uplink switching that 1-port transmission is performed on each carrier on the third band and the associated band.

20. A computer-readable non-volatile storage medium comprising at least one computer program configured to cause a user equipment (UE) having at least one processor to perform operations comprising:

configuring uplink bands comprising a first band, a second band, and a third band;
receiving a first parameter for indicating a state of transmission (Tx) chains based on the state of the Tx chains after uplink switching being not unique, and (ii) a second parameter for configuring an associated band for the third band; and
under an operation state in which 1-port transmission (first transmission) can be supported on each carrier on the first band and the second band, performing 1-port transmission (second transmission) on a carrier on the third band without transmission on the first band and the second band,
wherein the uplink switching is performed based on the first transmission and the second transmission, and
wherein based on a value of the first parameter indicating one Tx chain and the associated band being configured by the second parameter, the UE considers for the uplink switching that 1-port transmission is performed on each carrier on the third band and the associated band.

21. A method of transmitting and receiving signals by a base station (BS) in a wireless communication system, the method comprising:

configuring uplink bands comprising a first band, a second band, and a third band for a user equipment (UE); transmitting a first parameter for indicating a state of transmission (Tx) chains based on the state of the Tx chains after uplink switching being not unique, and (ii) a second parameter for configuring an associated band for the third band; and

receiving 1-port transmission (second transmission) on a carrier on the third band without transmission on the first band and the second band, from the UE under an operation state in which 1-port transmission (first transmission) can be supported on each carrier on the first band and the second band,

wherein the uplink switching is performed based on the second transmission, and

wherein based on a value of the first parameter indicating one Tx chain and the associated band being configured by the second parameter, the BS considers for the uplink switching that 1-port transmission is performed on each carrier on the third band and the associated band.

22. A base station (BS) configured to transmit and receive signals in a wireless communication system, the BS comprising:

at least one transceiver;

at least one processor; and

at least one memory operably connected to the at least one processor and storing instructions that, when executed, cause the at least one processor to perform specific operations comprising:

configuring uplink bands comprising a first band, a second band, and a third band for a user equipment (UE); transmitting (i) a first parameter for indicating a state of transmission (Tx) chains based on the state of the Tx chains after uplink switching being not unique, and (ii) a second parameter for configuring an associated band for the third band; and

receiving 1-port transmission (second transmission) on a carrier on the third band without transmission on the first band and the second band, from the UE under an operation state in which 1-port transmission (first transmission) can be supported on each carrier on the first band and the second band,

wherein the uplink switching is performed based on the second transmission, and

wherein based on a value of the first parameter indicating one Tx chain and the associated band being configured by the second parameter, the BS considers for the uplink switching that 1-port transmission is performed on each carrier on the third band and the associated band.

【FIG. 1】

【FIG. 2】

【FIG. 3】

【FIG. 4】

Previous transmission          Current transmission

(a)

Previous transmission          Current transmission

(b)

【FIG. 5】

【FIG. 6】

【FIG. 7】

100
First Device

108 / 208

200
Second Device

102 — Processor(s)  Transceiver(s)

Transceiver(s)  Processor(s) — 202

Memory(s)

Memory(s)

104  106

206  204

【FIG. 8】

Device (100, 200)

Communication unit (110)
(e.g., 5G communication unit)

Control unit (120)
(e.g., processor(s))

Communication circuit (112)
(e.g., processor(s), memory(s))

Memory unit (130)
(e.g., RAM, storage)

Transceiver(s) (114)
(e.g., RF unit(s), antenna(s))

Additional components (140)
(e.g., power unit/battery, I/O unit,
driving unit, computing unit)

【FIG. 9】

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108  208

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
|---|
| **PCT/KR2023/014820** |

**A. CLASSIFICATION OF SUBJECT MATTER**

**H04L 5/00**(2006.01)i; **H04L 27/26**(2006.01)i; **H04W 72/04**(2009.01)i; **H04W 72/23**(2023.01)i; **H04W 72/12**(2009.01)i; **H04B 7/0404**(2017.01)i

According to International Patent Classification (IPC) or to both national classification and IPC

**B. FIELDS SEARCHED**

Minimum documentation searched (classification system followed by classification symbols)

H04L 5/00(2006.01); H04B 7/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 대역(band), Tx 체인(chain), 상향링크(uplink), 스위칭(switching), 포트(port), 파라미터(parameter), 상태(state), 연관(associated)

**C. DOCUMENTS CONSIDERED TO BE RELEVANT**

| Category* | Citation of document, with indication, where appropriate, of the relevant passages | Relevant to claim No. |
|---|---|---|
| A | CHINA TELECOM. Discussion on UL Tx switching across up to 3 or 4 bands. R1-2206701, 3GPP TSG RAN WG1 Meeting #110. Toulouse, France. 12 August 2022.<br>See section 2.3. | 1-22 |
| A | NTT DOCOMO, INC. Discussion on multi-carrier UL Tx switching scheme. R1-2207425, 3GPP TSG RAN WG1 Meeting #110. Toulouse, France. 12 August 2022.<br>See section 2. | 1-22 |
| A | CATT. Discussion on Multi-carrier UL Tx switching scheme. R1-2206383, 3GPP TSG RAN WG1 Meeting #110. Toulouse, France. 12 August 2022.<br>See sections 2-2.4. | 1-22 |
| A | GOOGLE INC. Discussion on multi-carrier UL Tx switching scheme. R1-2207555, 3GPP TSG RAN WG1 Meeting #110. Toulouse, France. 12 August 2022.<br>See section 2. | 1-22 |
| A | WO 2022-183397 A1 (QUALCOMM INCORPORATED) 09 September 2022 (2022-09-09)<br>See claims 1-30. | 1-22 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014820**

| Patent document cited in search report | Publication date (day/month/year) | Patent family member(s) | Publication date (day/month/year) |
|---|---|---|---|
| WO 2022-183397 A1 | 09 September 2022 | CN 116941189 A | 24 October 2023 |

Form PCT/ISA/210 (patent family annex) (July 2022)